# EUROPEAN PATENT SPECIFICATION

(11) **EP 1 713 727 B1**
(45) Date of publication and mention of the grant of the patent: **12.12.2007**
(21) Application number: 05713334.0
(22) Date of filing: 10.02.2005
(51) Int. Cl.: C02F 1/00, B01D 35/153

(54) **WATER TREATMENT CARTRIDGE SHUTOFF**
WASSERBEHANDLUNGSKARTUSCHENABSPERRUNG
DISPOSITIF D'ARRET DE CARTOUCHE DE TRAITEMENT D'EAU

(30) Priority: 13.02.2004 US 544425 P; 27.02.2004 US 548742 P
(43) Date of publication of application: 25.10.2006
(73) Proprietor: The Pur Water Purification Products Inc., Cincinnati, OH 45202 (US)
(72) Inventor: BROYLES, Norman, Scott, Hamilton, Ohio 45011 (US); COLLIAS, Dimitris, Ioannis, Mason, Ohio 45040 (US); TANNER, John, David, Plymouth, MN 55447 (US); BRETL, Donald, Stephen, West Chester, OH 45069 (US); STAHLEY, Robert, Edward, Middletown,OH 45042 (US)
(74) Representative: Clemo, Nicholas Graham
(86) International application number: PCT/US2005/004320
(87) International publication number: WO 2005/080273

(56) References cited:
- US-A- 3 038 610
- US-B1- 6 428 687
- PATENT ABSTRACTS OF JAPAN vol. 018, no. 061 (C-1160), 2 February 1994 (1994-02-02) -& JP 05 277468 A (TADASHI NAKAMURA), 26 October 1993 (1993-10-26) -& DATABASE WPI Section Ch, Week 199347 26 October 1993 (1993-10-26), Derwent Publications Ltd., London, GB; AN 1993-373770 XP002328528

## Description

### FIELD OF THE INVENTION

The present invention relates to the field of water treatment cartridges, and, more particularly, to the field of water treatment cartridges that comprise a shutoff for arresting the flow of water through the water treatment cartridge.

### BACKGROUND OF THE INVENTION

Water may contain many different kinds of contaminants including, for example, particulates, chemicals, and microbiological organisms, such as bacteria, viruses, and protozoa. In a variety of circumstances, these contaminants must be reduced in concentration or completely removed from the water before it is potable.

The quality of water varies widely around the world. In the U.S. and other developed countries, drinking water is typically municipally treated. During that treatment, contaminants, such as suspended solids, organic matter, heavy metals, chlorine, bacteria, viruses, and protozoa are removed from the water before it is discharged to the homes of consumers. However, equipment malfunction and/or infrastructure breakdown and other problems with water treatment utilities can lead to incomplete removal of the contaminants.

Many developing countries are without water treatment utilities. As such, there are deadly consequences associated with exposure to contaminated water, as many developing countries have increasing population densities, increasingly scarce water resources, and no water treatment utilities. It is common for sources of drinking water to be in close proximity to human and animal waste, such that microbiological contamination is a major health concern.

As a result of waterborne microbiological contamination, an estimated six million people die each year, half of which are children under 5 years of age. In 1987, the U.S. Environmental Protection Agency (herein "EPA") introduced the "*Guide Standard and Protocol for Testing Microbiological Water Purifiers*". This guide standard and protocol provides guidelines and performance requirements for drinking water treatment systems that are designed to reduce specific health related contaminants in public or private water supplies. The requirements are that the effluent from a water treatment system exhibits 99.99% (or equivalently, 4 log) removal of viruses, 99.9999% (or equivalently, 6 log) removal of bacteria, and 99.9% (or equivalently, 3 log) removal of protozoa (cysts) against a challenge.

The EPA guide standard and protocol, as well as other National Sanitation Foundation (herein "NSF") testing standards for the removal of chemicals and particulates (e.g., chlorine, volatile organic compounds, trihalomethanes, turbidity, etc.), require that the water treatment cartridges are tested to their rated capacity (e.g., 100 gallons) or slightly above that (e.g., 120 gallons), depending on the presence of life indicators. It is typically expected that water treatment cartridge performance will decrease when a water treatment cartridge is used beyond its rated capacity, such that chemicals and microorganisms can pass through the water treatment cartridges into effluent water. In order to protect the users of these water treatment cartridges from harm, manufacturers of water treatment cartridges typically instruct the user to dispose of the water treatment cartridges after a predetermined period of time and/or capacity. However, based on common practices by consumers, it is expected that such instructions will be ignored or lost, resulting in use of the water treatment cartridge beyond its rated time and/or capacity. Thus, there is a need to provide water treatment cartridge users with water treatment cartridges that at least substantially arrest the flow of water therethrough after a predetermined amount of time to ensure the user's compliance, thus ensuring the user's safety and well-being.

Additionally, because the of the above mentioned health concerns associated with contaminated water, especially in developing countries, there is a desire to provide a water treatment cartridge that at least substantially arrests the flow of water therethrough after contaminated water breaches the intended flow path through the water treatment cartridge. That is, from the time that contaminated water first breaches the intended flow path through the water treatment cartridge, there is a desire to at least substantially arrest the flow of water therethrough after a relatively short predetermined amount of time.

### SUMMARY OF THE INVENTION

A water treatment cartridge may comprise an inlet for receiving water into the water treatment cartridge, an outlet for egress of water from the water treatment cartridge, a water treatment material for treating the water, and a shutoff for at least substantially arresting the flow of water through the water treatment cartridge. The shutoff may comprise an engine. At least a portion of the engine may expand upon exposure to water, such that the shutoff at least substantially arrests the flow of water through the water treatment cartridge after a predetermined amount of time, as a direct or indirect result of expansion of the engine. The arrest of the flow of water through the water treatment cartridge may be irreversible.

### BRIEF DESCRIPTION OF THE DRAWING

Fig. 1 is an exploded perspective view of a water treatment cartridge comprising a shutoff.
Fig. 2 is a side elevational view of the water treatment cartridge of Fig. 1.
Fig. 3 is an exploded perspective view of the shutoff of Fig. 1.
Fig. 4 is a cross sectional side view of the water treatment cartridge of Fig. 1 taken along line A - A thereof.
Fig. 5 is a cross sectional side view of an alternative embodiment of the shutoff of the water treatment cartridge of Fig. 4.
Fig. 6 is a cross sectional side view of an alternative embodiment of the shutoff of the water treatment cartridge of Fig. 4.
Fig. 7 is a cross sectional side view of the water treatment cartridge of Fig. 4 wherein the shutoff is oriented such that it is blocking the flow port.
Fig. 8-A is a graph illustrating the % weight change and % length change for an approximately ¼" diameter by 1" MH 1657 engine, wherein all sides of the engine are exposed to ambient temperature de-ionized (herein, "DI") water (i.e., unconstrained growth).
Fig. 8-B is a graph illustrating the % weight change and % length change for an approximately ¼" diameter by 1" MH 1657 engine, wherein only the upper surface of the engine is exposed to ambient temperature DI water, and movement is substantially restricted to one direction (i.e., constrained growth).
Fig. 9 is a graph illustrating the transient advancement of valves as a result of engine water absorption and growth described in Examples 1 and 2-2.
Fig 10 is a graph illustrating the % weight change and % length change for unconstrained MH 1657 engines in water at 73°F and pHs of 4, 7 and 10.
Fig. 11-A is a graph illustrating the transient advancement of valves as a result of constrained MH 1657 engine water absorption and growth at water temperatures of 73°F and 85°F.
Fig. 11-B is a graph illustrating the % weight change for unconstrained MH 1657 engines at water temperatures of 38°F, 73°F, and 104°F.
Fig. 12 is a graph illustrating the % weight change and % length change for unconstrained MH 1657 engines in water at ambient temperature and at pressures of 0 psig and 55 psig.
Fig. 13-A is a cross sectional side view of an alternative embodiment of the shutoff of the water treatment cartridge of Fig. 4.
Fig. 13-B is a cross sectional side view of an alternative embodiment of the shutoff of the water treatment cartridge of Fig. 4.
Fig. 14-A is a cross sectional side view of an alternative embodiment of the top portion of the housing of Fig. 4, wherein the top portion comprises a second shutoff, wherein the water treatment cartridge is unengaged from a portion of a water treatment device.
Fig. 14-B is a cross sectional side view of the water treatment cartridge of Fig. 14-A, wherein the second shutoff is oriented such that it is blocking the flow port, and wherein the water treatment cartridge is engaged to a portion of the water treatment device.
Fig. 15 is a cross sectional side view of an alternate embodiment of the top portion of the housing of Fig. 4, wherein the top portion comprises an alternate embodiment of the shutoff and second shutoff of Fig. 14-A, wherein the water treatment cartridge is unengaged from a portion of a water treatment device.

### DETAILED DESCRIPTION OF THE INVENTION

As used herein, the phrase "highly water swellable material" refers to a material that has an equilibrium length change of at least about 5% in at least one direction upon saturation with DI water at 25°C and normal atmospheric pressure. Examples of highly water swellable materials include, but are not limited to, water soluble polymers, cross-linked water soluble polymers, hydrogels, copolymers, clays (e.g. bentonite), and wood. Examples of water soluble polymers include, but are not limited to, polyether (e.g. poly(ethylene oxide) and poly(ethylene glycol)), polyimines (e.g. poly(ethylene imine)), acrylic polymers (e.g. poly(acrylic acid) and its salts, poly(methacrylic acid) and its salts, and polyacrylamide), cellulosics (e.g. hydroxyalkyl cellulose, hydroxyalkyl alkyl cellulose, and carboxymethyl cellulose), vinyl polymers (poly(vinyl alcohol), poly(vinyl amine) and poly(vinyl pyrollidone)), natural gums and resins (xanthan gum and guar gum), and starches and modified starches. Examples of hydrogels include, but are not limited to, poly(hydroxy ethyl methacrylate), poly(ethylene glycol monomethacrylate), cross-linked poly(acrylic acid), potassium or sodium salts of cross-linked poly(acrylic acid), potassium salt of poly(acrylic acid-co-acrylamide), sodium salt of cross-linked poly(acrylic acid-*graft-*poly(ethylene oxide), poly(2-hydroxyethyl methacrylate), poly(2-hydroxypropyl methacrylate), sodium salt of cross-linked poly(isobutylene-co-maleic acid), etc.), and superabsorbers (e.g., cross-linked polyethylene oxide). Examples of copolymers include, but are not limited to, block copolymers (e.g. polyamide polyether block copolymers), random copolymers, and graft copolymers.

As used herein, the phrase "water swellable material" refers to a material that has an equilibrium length change of between about 0.5% and about 5% in at least one direction upon saturation with DI water at 25°C and normal atmospheric pressure. Examples of water swellable materials include, but are not limited to, certain polyamides, polycaprolactam, nylon 6-6, and nylon 4-6.

As used herein, the phrase "non water swellable material" refers to a material that has an equilibrium length change of less than about 0.5% in any direction upon saturation with DI water at 25°C and normal atmospheric pressure. Examples of non water swellable materials include, but are not limited to, polyolefins (e.g., polyethylene, and polypropylene), styrenics (e.g., polystyrene, acrylonitrile butadiene styrene - ABS), polyesters, and polycarbonate.

As used herein, the term "MV 1074" refers to the commercially available block copolymer of polylaurylactam and poly(ethyleneglycol) Pebax® MV 1074 from ATOFINA Chemicals, Inc., 2000 Market Street, Philadelphia, PA, 19103-3222, USA.

As used herein, the term "MH 1657" refers to the commercially available block copolymer of polycaprolactam and poly(ethyleneglycol) Pebax® MH 1657 from ATOFINA Chemicals, Inc., 2000 Market Street, Philadelphia, PA, 19103-3222, USA.

As used herein, the term "MV 3000" refers to the commercially available block copolymer of polyamide and polyether Pebax® MV 3000 from ATOFINA Chemicals, Inc., 2000 Market Street, Philadelphia, PA, 19103-3222, USA.

As used herein, the phrase "highly water permeable material" refers to a material that has a moisture vapor transmission rate (herein, "MVTR") greater than about 600 g·µm/m²·day at 90% relative humidity (herein, "RH") and 38°C. Examples of highly water permeable materials include, but are not limited to, polyamides, block copolymers of polyamides and polyethers, cellulosics, polystyrene, polycarbonate, porous ceramics, porous metals, and porous polymers. Herein, the MVTR is measured per ASTM F 1249-90 standard.

As used herein, the phrase "water permeable material" refers to a material that has a MVTR between about 75 g·µm/m²·day and about 600 g·µm/m²·day at 90% RH and 38°C. Examples of water permeable materials include, but are not limited to, polyethylene, polypropylene, polar olefin copolymers such as ethylene-vinylacetate (herein, "EVA"), ethylene-acrylic acid (herein, "EAA"), ethylene-methacrylic acid (herein, "EMA"), ethylene-vinylalcohol (herein, "EVOH").

As used herein, the phrase "water impermeable material" refers to a material that has a MVTR less than about 75 g·µm/m²·day at 90% RH and 38°C. Examples of water impermeable materials include, but are not limited to, polyvinylidene chloride (herein, "PVDC"), non-porous ceramics, non-porous metals, and metalized polymers.

As used herein, the phrase "growth" refers to the transient geometry change of a material as it absorbs water. If the material is constrained such that growth occurs in substantially one direction, then growth is quantified by the length measured in the direction of growth at various times. If the material is unconstrained such that growth can occur in all directions, then growth is quantified by the length measured along the direction of maximum initial length at various times.

As used herein, the phrase "equilibrium growth" refers to the final geometry of a material that has absorbed its equilibrium amount of water and is also quantified with a length similar to the "growth" definition.

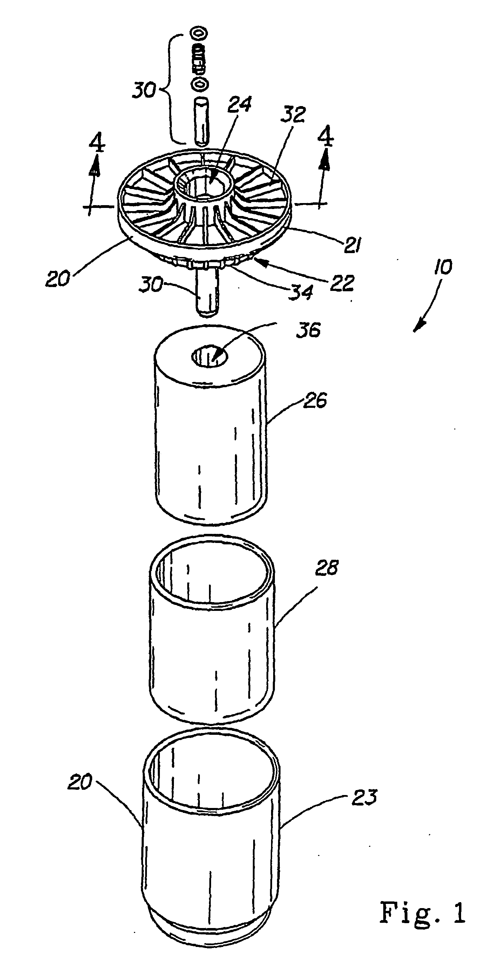

As shown in Fig. 1, an embodiment of the present invention may be a water treatment cartridge 10 which may comprise a housing 20, an inlet 22 for receiving water into the water treatment cartridge 10, an outlet 24 for egress of water from the water treatment cartridge 10, a water treatment material 26 for treating water, a pre-treatment material 28 for treating water and/or protecting against clogging of the water treatment material 26, and a shutoff 30 for at least substantially arresting the flow of water through the water treatment cartridge 10.

The housing 20 may be cylindrical, however, it may be various shapes and sizes. The housing may comprise a top portion 21 and a bottom potion 23. The housing 20 may be made from one or more of a variety of materials, including, but not limited to, one or a combination of plastics, metal and alloys thereof, fiberglass, etc. The housing 20 may form a well-defined compartment that holds the water treatment material 26. Alternatively, the housing may simply cap at least one of the end portions of the water treatment material 26 (not shown). Additionally, the portion of the housing 20 which forms the inlet 22 or outlet 24 may be supported by one or more ribs 32.

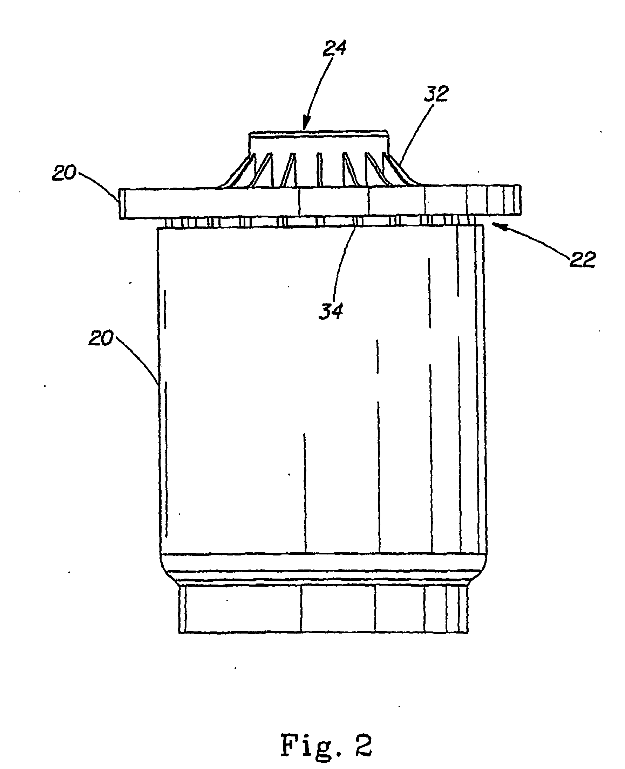

The inlet 22 may be a plurality of openings (defined by ribs 34) where the top portion of the housing 20 meets the main portion of the housing 20. The inlet 22 may be located at the first end of the water treatment cartridge 10 (*see* also Fig. 2). Alternatively, the inlet may be a single opening located at an end of the water treatment cartridge 10, or the inlet may be a portion of exposed water treatment material 26 (e.g., an exposed portion of a carbon block) (not shown). That is, water may enter the water treatment cartridge 10 through the exposed portion of the water treatment material 26. The inlet 22 may optionally be placed on the side or the second end of the water treatment cartridge 10.

The outlet 24 may be a circular opening, concentric with the longitudinal axis of the water treatment cartridge 10. The inlet 22 and outlet 24 may be of varying size and oriented in any manner that best serves the application. Thus, the inlet 22 and outlet 24 can be oriented in the same proximity (e.g., sharing the same opening), in near proximity (e.g., sharing the same surface or end), or in distant proximities from one another (e.g., located at opposite ends).

The water treatment material 26 may be contained within the housing 20. The water treatment material 26 may have a core region 36. As used herein, "core region" means the hollow formed within the water treatment material 26. The core region 36 may be concentric with the longitudinal axis of the water treatment cartridge 10. The core region 36 may extend continuously from the first end, to the second end of the water treatment material 26, or may extend only partially into the water treatment material 26.

Examples of the water treatment material 26 are described in U.S. Patent Nos. 2,167,225, 2,335,458, 4,172,796, 4,493,772, 4,764,274, 4,025,438, 4,094,779, 5,679,248, 6,274,041, 6,337,015, and U.S. Patent. App. Nos. 10/464,209, 10/464,210, 09/935,810, 09/935,962, 09/628,632, 09/832,581, 09/832,580, 09/736,749, 09/574,456, 09/564,919, and 09/347,223. For example, the water treatment material 26 may include, but is not limited to, one or a combination of carbon (e.g., activated carbon, such as a tube of porous carbon, or a block of porous carbon, or carbon powder or particles sintered with a thermoplastic binder or the like), ion exchange material (e.g., in the form of resin beads, flat filtration membranes, fibrous filtration structures, etc.), zeolite particles, or modified zeolite particles (e.g., silver loaded), polyethylene, or charge-modified melt-blown or micro-fiber glass webs, alumina, metal oxides, diatomaceous earth, cationically-modified diatomaceous earth, cationically-modified activated carbon, etc.

The pre-treatment material 28 may be used for the purpose of keeping the water treatment material 26 from clogging, providing protection to the treatment material 26, trapping fines, etc. The pre-treatment material 28 may be in the form of a sheet, which may be pleated or unpleated and wrapped in one or more layers around the water treatment material 26. The pre-treatment material 28 may include, but is not limited to, one or a combination of porous membranes, nonwoven fabric sheets, woven fabric sheets, open cell foamed sheets, carbon (consistent with the above-mentioned treatment material 26), untreated glass fiber papers, treated cellulosic or glass fiber papers, webs including nanofibers, cationically-charged porous membranes, webs including cationically-charged nanofibers, etc.

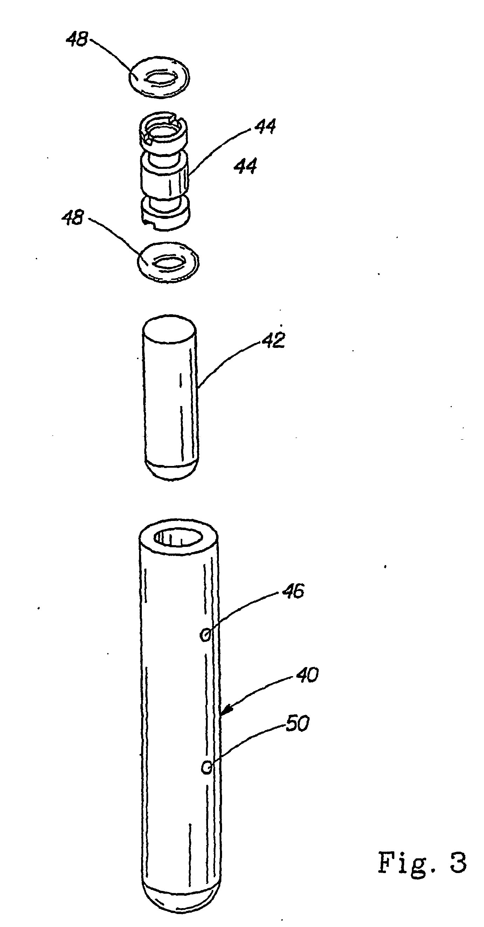

As shown in Fig. 3, the shutoff 30 may comprise a casing 40, an engine 42, and a valve 44. The shutoff 30 may act as a means of at least substantially and irreversibly arresting the flow of water through the water treatment cartridge 10. The shutoff 30 may be used in various water treatment cartridges, including, but not limited to, those described in U.S. Patent Nos. 5,525,214, 6,241,103 and U.S. App. Nos. 10/423,157, 10/424,200, and 10/665,984. The shutoff 30 may be used internally or externally with a water treatment cartridge 10. Alternatively, the shutoff 30 may not be part of the water treatment cartridge 10, but may be internally or externally part of a water treatment device, such that the shutoff 30 is in communication with the flow of water which enters, exits, or flows through the water treatment device. The shutoff 30 may be used in various water treatment cartridges and/or water treatment devices, including, but not limited to, those described in U.S. Patent Nos. 5,527,451, and 5,928,504, and U.S. App. Nos. 10/643,669, and 10/665,948.

The casing 40 may be tubular and fixed within the core region 36 via glue (or by friction fitting, welding, etc.). At least a portion of the core region 36 may be lined by the casing 40. The casing 40 may be made from, but not limited to, a combination of plastics, metal, ceramics and alloys thereof. The casing 40 may comprise one or a combination of highly water permeable, water permeable, or water impermeable materials. In the case where water impermeable materials are used, water may only enter the engine 42 from areas not covered by the casing 40. The casing 40 may be constructed such that substantial physical rigidity is obtained and engine 42 growth is constrained, in all but substantially one-direction, by the casing 40. As such, the casing 40 may be constructed of materials with inherent rigidity such as polypropylene, polycarbonate, metal, ceramics, etc. The casing 40 may be of thickness sufficient to constrain the engine 42 growth. In the case where water permeable materials are used in casing 40, the thickness of the casing 40 may prevent appreciable water from entering the engine 42 through the casing 40 and water may only enter the engine 42 from areas not covered by the casing 40. In such cases, the casing 40 is said to be substantially water impervious.

The casing 40 may have one or more flow ports 46 in its side portion such that water may flow from the water treatment material 26, through the flow port 46, then into the casing 40, then through the outlet 24 of the water treatment cartridge 10. The flow port 46 may be various sizes and/or shapes (including circular, rectangular, oval, etc.). Alternatively, the interior portion of the core region 36 may serve as the casing 40.

The engine 42 may be a solid slug of material of various shapes (e.g., cylindrical, round, elliptical, conical, etc.). Alternatively, the engine 42 may be a powder, pellets, etc. The engine 42 may also be hollow (e.g., a tube). The engine 42 may be partially encased (i.e., at least one side, face, or continuous surface of the engine 42 may be exposed to water which enters the casing 40) within the casing 40 such that only a portion of the engine 42 is exposed to water that enters the casing 40, and/or such that it may grow or swell in a substantially single direction.

While an engine 42 that is not encased (i.e., under unconstrained conditions) may grow to its final (or substantially final) length within hours, an engine that is partially encased (i.e., under constrained conditions) may not grow to its final (or substantially final) length for several months. The final length of the engine 42 grown under constrained conditions may be greater than the final length of the engine 42 grown under unconstrained conditions. Two factors may contribute to this extended growth period in the constrained conditions. First, the area exposed to water is relatively small compared to the total surface area of the engine 42, and second, the diffusion pathway of the water throughout the engine 42 is increased. Partial exposure of the engine 42 may be accomplished by tightly seating the engine 42 within the casing 40 (wherein the engine 42 is in the general shape of the casing 40), or by coating all but a portion of the engine 42 with a material that can be either a highly water permeable, water permeable, or water impermeable, depending upon the desired attributes.

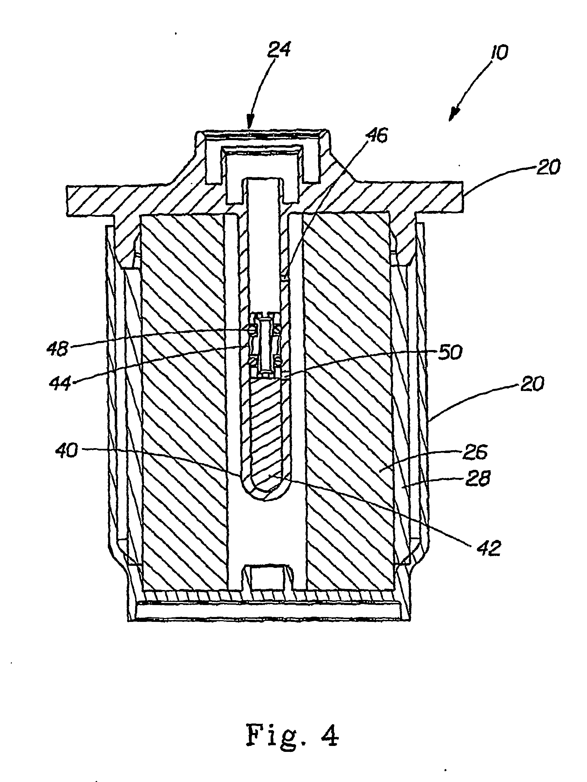

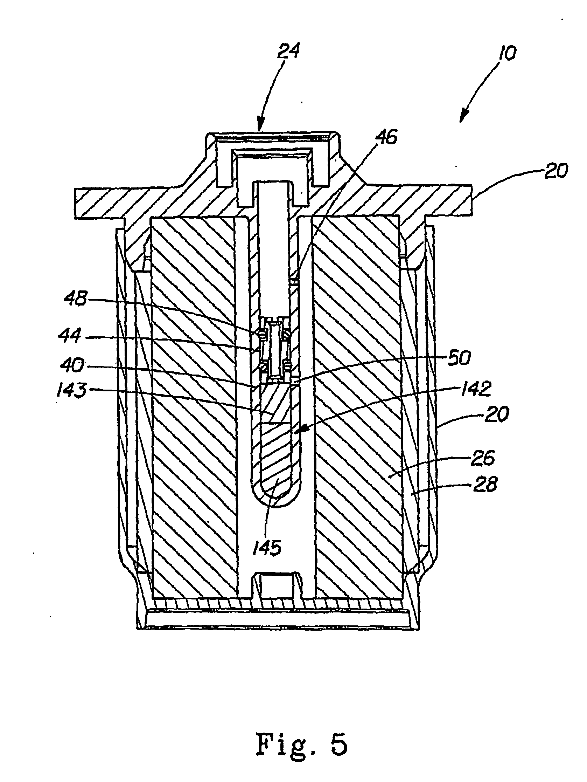

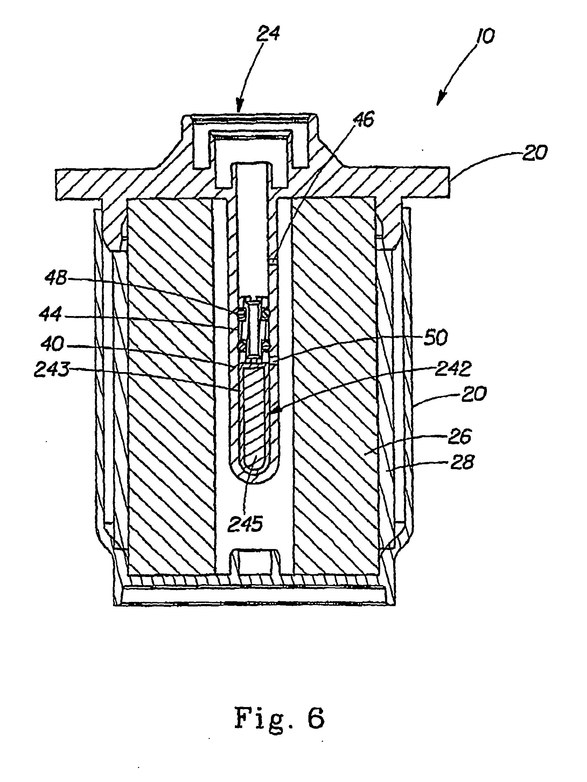

The engine 42 may be made from a single water swellable material and/or a single highly water swellable material. Alternatively, the engine 42 may also be made from, but are not limited to, a water swellable material and/or a highly water swellable material in combination with other materials which may include, non water swellable materials, water impermeable materials, water permeable materials, and/or highly water permeable materials (e.g., engine 42, Fig. 4). The engine 42 may also be made by combining the aforementioned combinations into one or more layers (e.g., engine 142 comprising a first highly water permeable or water permeable layer 143 and a second highly water swellable layer 145, Fig. 5). For instance, one material layer may be used to completely or partially sheath another material layer (e.g., engine 242 comprising a first highly water permeable or water permeable layer 243 and a second highly water swellable layer 245, Fig. 6). The sheathing material 243 may be an elastic and highly water permeable or water permeable skin made from one of the following, but not limited to, one or a combination of polar olefin copolymers such as ethylene-vinylacetate (EVA), ethylene-acrylic acid (EAA), ethylene-methacrylic acid (EMA), ethylene-vinylalcohol (EVOH), polyamides, polyethers, copolymers of polyamide and polyether, cellulosics, cross-linked polyacrylate, etc., while the sheathed material 245 may be, but not limited to, one or a combination of water swellable or highly water swellable materials. The sheathing material 243 may also be, but not limited to, a water impermeable material made from one or a combination of polyolefins and styrenics.

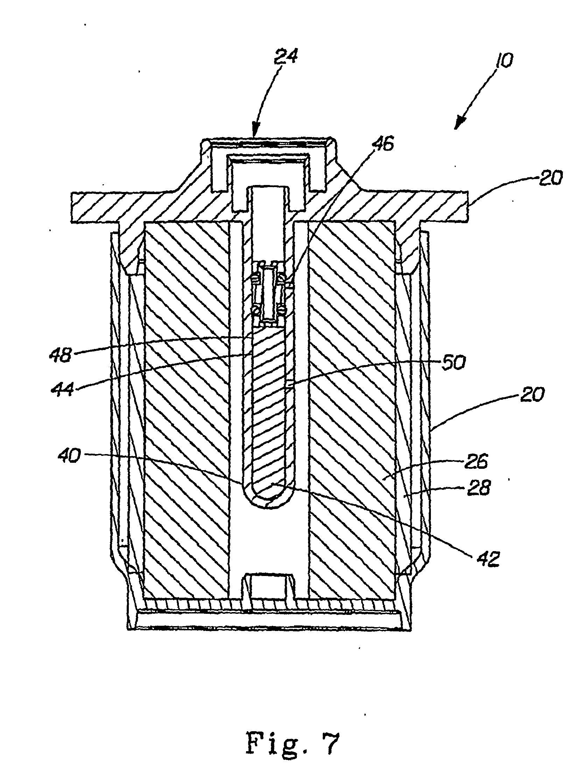

The valve 44 may be a hollow tube slideably fitted within the casing 40 and in physical contact with the engine 42. The valve 44 may be physically connected to or may be separate from the engine 42. The valve 44 may fit within the casing 40 such that it is capable of blocking the flow of water through the flow port 46. Blocking the flow of water through the flow port 46 may be accomplished a number of ways, including, dimensioning the valve 44 to fit tightly within the casing 40, and/or by placing O-rings 48 around the valve 44 such that, at the time the flow is arrested, the O-rings 48 may be located at either side of the flow port 46 *(see* Fig.7). The valve 44 may be made from, but not limited to, one or a combination of, plastics, metal, ceramics and alloys thereof.

One possible flow path will now be described (Figs. 4 and 7 may contribute to a better understanding of the following flow path description). Water may enter the water treatment cartridge 10 via the inlet 22, flow radially through the pre-treatment material 28 and the water treatment material 26, enter and fill the casing 40 via the flow port 46, flow through the hollow portion of the valve 44, contact the engine 42 (the engine 42may be considered to be in a first position initially), such that the engine 42 grows towards the flow port 46 over a predetermined period of time (due to diffusion, and possibly convection, of water through at least a portion of the engine 42). Water may then exit the casing 40 via the outlet 24. Prior to arrest of the flow of water through the water treatment cartridge 10, water may continue to flow into the casing 40 via the flow port 46. As the engine 42 expands, it may physically contact and move the valve 44 such that the valve 44 slides within the casing 40 and blocks the flow port 46 (the engine 42 may be considered to be in a second position at this point), substantially or completely arresting the flow of water through the water treatment cartridge 10 because water cannot flow past the valve 44, particularly the O-rings 48 of the valve 44.

The shutoff 30 may be set in motion after an initial use. A volume of at least about 1 mL may be needed to be in substantially constant contact with the engine 42 to start and maintain the motion of the shutoff 30 until the engine 42 blocks the flow port 46 with the valve 44, arresting the flow of water through the water treatment cartridge 10. After a period of time without exposure to water (after about 2 days, about 20 days, about 40 days, about 100 days, about 200 days, or about 300 days), or to less than 100% relative humidity air, the engine 42 may begin to shrink. However, in circumstances where the valve 44 has blocked off the flow port 46 and the valve 44 is not connected to the engine 42, the valve 44 may remain in place, blocking the flow port 46. Thus, if a user sets their water treatment cartridge 10 aside after the initial blocking of the flow port 46 and sufficient time/energy is supplied to evacuate the water in contact with the engine 42, the engine 42 may shrink and pull-back (herein, "drying out" or "dry out"), from the valve 44, leaving the flow port 46 blocked by the valve 44.

However, if "dry out" occurs before the flow port 46 is blocked by the valve 44, then the time required to block the flow port 46 could be increased by the "drying out" of the engine 42, which may shrink to a position below the valve 44. The engine 42 would then have to grow back to its original position before the valve 44 could be further advanced to block the flow port 46. This effect may be minimized by utilizing an engine 42 composed of a permanently deformable material (e.g., certain block copolymers of polyether and polyamide, such as block copolymers of polycaprolactam and poly(ethyleneglycol)) that irreversibly yields after a given deformation created by the swelling response to water. After a given amount of growth and due to the restriction of growth in one-direction, the engine 42 may effectively yield in the growth direction. Therefore, upon "drying out", the engine 42 may shrink in all directions, and in particular, may shrink in diameter. When the user attempts to re-use the water treatment cartridge 10, the engine 42 will be wetted with water and growth will recommence. However, the growth rate may be significantly faster than the previous growth rate due to the increased surface area exposed as a result of the shrinkage in diameter of the engine 42. The engine 42 may rapidly return to its pre-"dry out" length such that the time required to block the flow port 46 will not be significantly delayed. In effect, the user would be unable to extend the lifetime of the water treatment cartridge 10 by "drying out" the water treatment cartridge 10 at any time.

The effects of "drying out" may also be minimized or eliminated by orienting a valve or diaphragm (not shown) in a manner that ensures intimate water contact with the engine 42. For instance, a one-way valve or diaphragm may be placed at the top of the casing 40 such that operating water pressure through the water treatment cartridge 10 may be able to move water through the one-way valve or diaphragm, but water remaining in the casing 40 when the water treatment cartridge 10 is disconnected from the water treatment device, or when the water treatment device is not being operated, is not able to move through the one-way valve or diaphragm. Thus, an amount of water will always remain in the casing 40 after initial charging of the water treatment cartridge 10, regardless of its orientation.

It may be desirable to consistently and predictably arrest water within a residential-scale water treatment cartridge 10 in order to assure user safety, and/or to comply with government standards. For instance, it may be desirable to arrest the flow of water through the water treatment cartridge 10 after a predetermined time, including, but not limited to, after about 20 days, after about 40 days, after about 60 days, after about 90 days, after about 200 days, after about 300 days, after about 365 days, after about 400 days, or after about 720 days from the time of initial use of the water treatment cartridge 10 (that is, after the time the water treatment cartridge 10 is first charged with water). However, several factors may impact engine 42 growth, and thus, overall consistency and predictability of arresting water flow through a water treatment cartridge 10, including, but not limited to, engine 42 and casing 40 composition and geometric configuration, water pH, water temperature, water pressure, and air bubbles at the interface between engine 42 and valve 44.

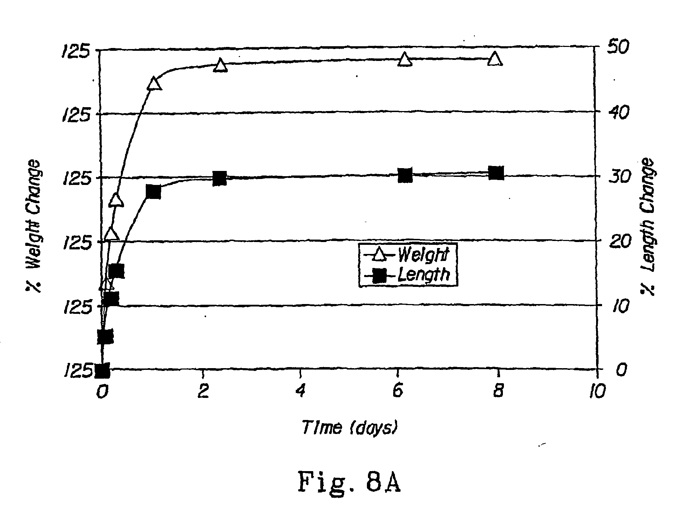

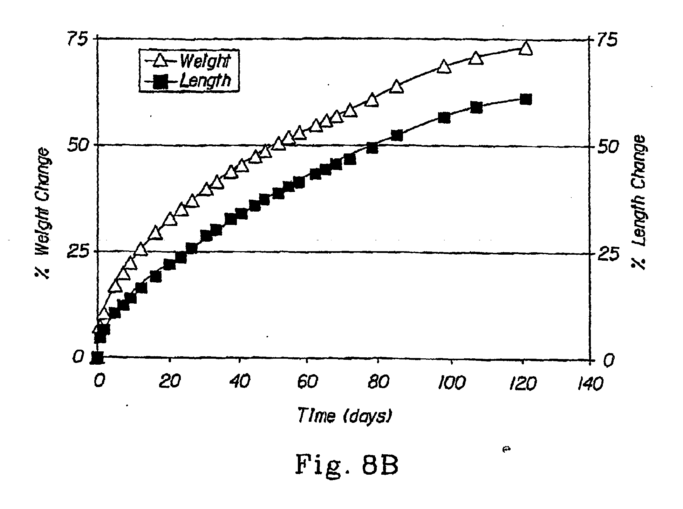

Engine 42 and casing 40 composition and geometric configuration may fundamentally determine engine 42 growth and movement of the valve 44. In general, engine 42 materials that cause substantial valve 44 movement tend to grow very rapidly compared to materials with less growth. In order to use the faster growing engine 42 materials, their kinetics may be controlled via geometry. In order to use water swellable, and especially highly water swellable, materials in this application, the geometry may be designed such that limited surface area is exposed to water and such that the diffusion pathway greatly increased. As shown in Fig. 8-A, by way of example and not to be a limitation, an engine 42 having a ¼" diameter by about 1" long slug (cylindrical member) of MH 1657 block copolymer of polycaprolactam and poly(ethyleneglycol) achieves approximately 90% equilibrium water absorption and approximately 90% equilibrium growth after a period of approximately one day. Surprisingly, as shown in Fig. 8-B, the same MH 1657 slug placed inside a rigid polypropylene cylinder (substantially water impervious geometry) having the same ¼" inside diameter but longer length, produces increased growth at a much slower rate due to restriction of the water contact area and directing growth in only one direction.

In order for the time to substantially arrest the flow of water to be consistent, the growth of the engine 42 may be kept relatively independent of environmental factors experienced in consumer use areas. Environmental factors may include, but are not limited to, the supply water's pH, temperature, and pressure. The swelling response (volume change due to water absorption) may vary according to the engine 42 material selected and may be dependent on environmental factors. The transient water absorption characteristics may be influenced by the interplay of water solubility and water diffusivity. The initial water flux (rate of water entering the engine 42 per unit area normal to engine 42 surface area exposed) is approximately proportional to water permeability, which is the product of water solubility and water diffusivity. If environmental factors influence the swelling response, water solubility, and/or water diffusivity, then engine 42 growth and time to arrest may be altered. In addition, the engine must be free of significant water absorption and significant growth prior to installation into the filtration device such as in the manufacturing, shipping, and storage process. In other words, the engine must not have absorbed significant water from the ambient environment to have resulted in swelling sufficient to affect initial length and shut-off life.

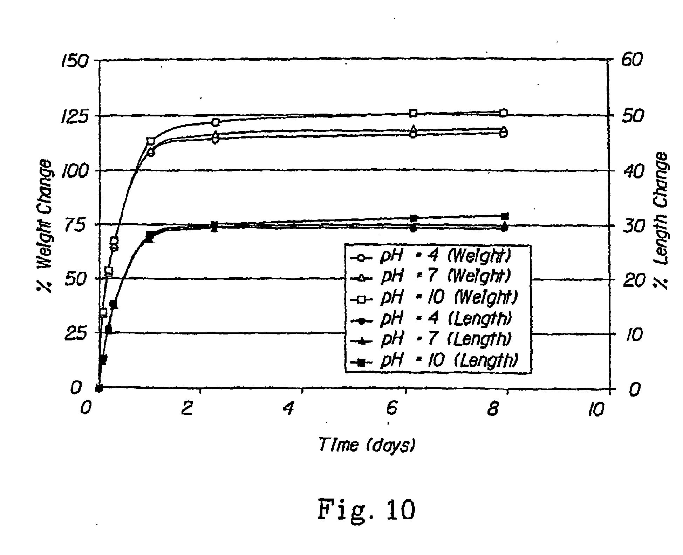

Typical residential water pHs may vary between 4 and 10. Water pH variations in this range are expected to influence the swelling response, water solubility, and/or water diffusivity of the engine 42. Unexpectedly, it is observed that certain block copolymers of polyamide and polyether result in growth that is relatively independent of pH variations typically observed in residential applications *(see,* e.g., Fig. 10 for unconstrained growth). Independent of effects on growth, water pH may also influence the mechanical stability of the engine 42. If the desired engine 42 has mechanical stability issues, then alternate configurations can be included to avoid the issue. These alternate configurations include a movable, highly water permeable or water permeable barrier (or layer) that allows the passage of water but not the associated pH influencing ions. In addition, the inclusion of an air barrier (not shown) at the interface between the engine 42 and the water can protect the engine 42 from pH extremes. Water may access the engine 42 via diffusion and/or convection through the air barrier.

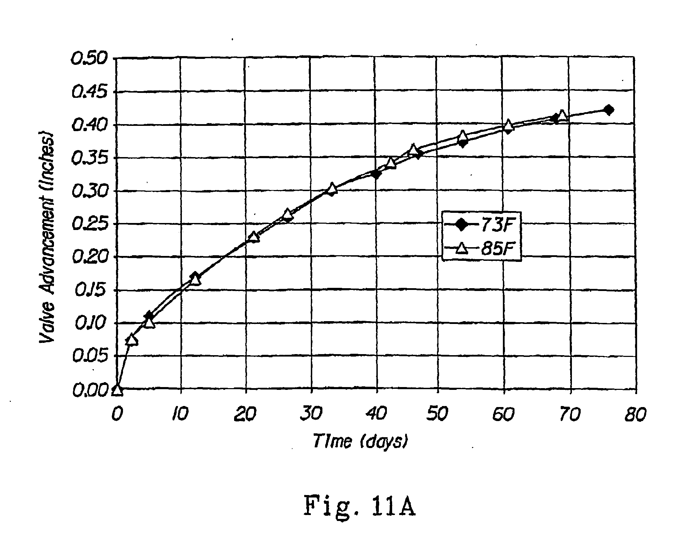

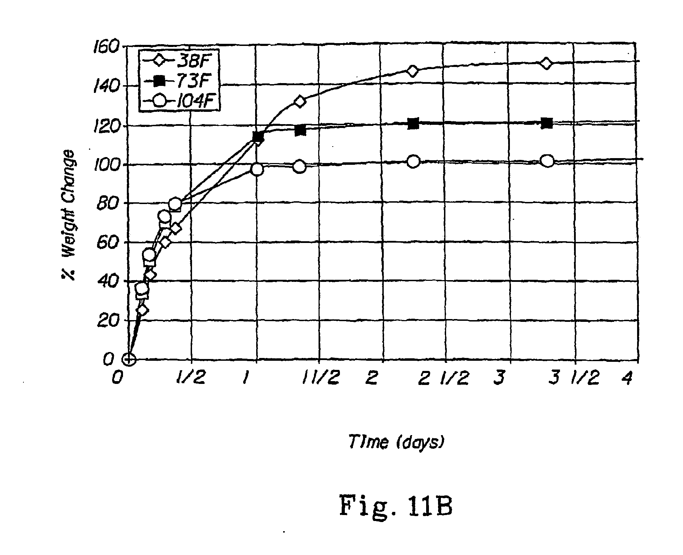

In typical residential applications, the temperature of the supply water may be highly variable. However, once water reaches the point of filtration, the temperature variation is less extreme and may be approximated by the temperature extremes observed in consumer homes. The typical home may have temperatures ranging from about 65 to about 90°F. Temperature variations in this range are expected to influence the swelling response, water solubility, and/or water diffusivity of the engine 42. With most materials, as temperature increases, water solubility and water diffusivity both increase. Because of this combination, it is expected that growth may be strongly influenced by even small temperature variations. Surprisingly, it is observed that certain block copolymers of polyamide and polyether result in growth that is relatively independent of small temperature variations (approximately 12°F in this particular case) *(see,* e.g., Fig. 11-A for constrained growth inside a casing and Fig. 11-B for unconstrained growth).

As observed, certain block copolymers of polyamide and polyether have the unusual characteristic of water solubility decreasing with increasing temperature *(see* e.g., Fig. 11-B for unconstrained growth), which has a tendency to partially offset the increase in water diffusivity with increasing temperature. Therefore, materials with decreasing water solubility with increasing temperature may be useful for this application. These types of materials lead to temperature being less important in growth due to the offset of solubility and diffusivity. Materials of this type include, but are not limited to, certain block copolymers of polyether and polyamide, such as block copolymers of polycaprolactam and poly(ethyleneglycol).

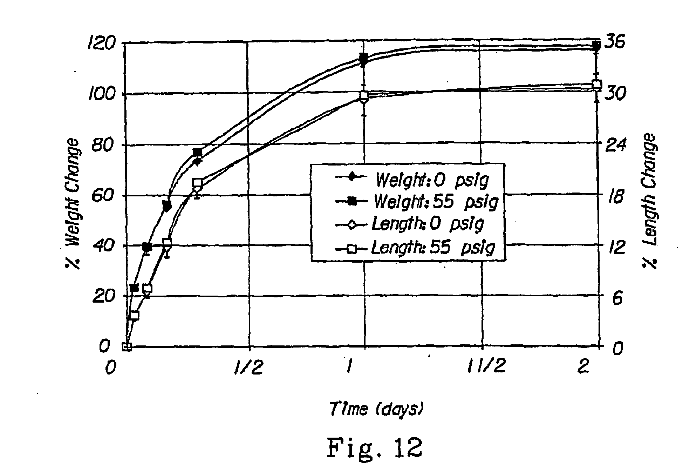

Typical residential water pressures may vary between about 2 psi and 120 psi. Increased pressure may increase the solubility of the water in the engine 42, thus affecting the kinetics of diffusion. The diffusivity and swelling response may also be altered due to the effect pressure has on material density. Certain block copolymers of polyamide and polyether may result in growth that is relatively independent of pressure variations in the range from zero to 55 psig (higher pressures not tested) (see, e.g., Fig. 12 for unconstrained growth).

In typical manufacturing, shipping, and storage environments, the relative humidity of the ambient air can vary widely. The packaging of the shut-off 30 may be designed to limit the exposure to the extremes of humidity. Regardless, the sensitivity of the engine 42 material to humidity may influence the shut-off 30 lifetime. Unexpectedly, it is observed that certain block copolymers of polyamide and polyether do not absorb significant quantities of water or swell significantly when exposed to environments with considerably less than 100% relative humidity (or direct contact with liquid water). For instance, at a temperature of about 73°F and a relative humidity of about 50%, a constrained MH 1657 slug (1/4" diameter by 1" long inside a rigid polypropylene casing 40 similar to the description of Figure 8-B) absorbed approximately 4% water, which resulted in growth of about 0.01" or about 1% after a period of about 290 days.

Air bubbles at the engine 42/valve 44 interface can create problems with repeatability of growth. If air bubbles exist, then the growth may be greatly slowed due to slow diffusion/convection of the water through the gas phase. If air bubbles do not exist, then the growth rate may be much greater. Therefore, the consistent release or non-release of the air bubble may be important for predictable growth and consistent arrest of water through the water treatment cartridge 10.

If it is desired to consistently release the bubble, then several mechanisms can be included for consistent release. As shown in Figs. 4-7, by way of example, an air evacuation hole 50 placed at the interface between the engine 42 and the valve 44 may allow the air to evacuate as the water treatment cartridge 10 is filled. Other means of achieving the desired effect may include the use of wicking materials inside the valve 44, the inclusion of water soluble/non-volatile (at room temperature and pressure) liquids (such as glycerin, which does not cause appreciable swelling of the engine 42) to prevent air from being present initially, etc. If it is desired for the air bubble to remain, then a hole (not shown) in the center of the valve 44 may be made sufficiently small to prevent the air from escaping. Another approach may be to use a solid valve as opposed to a valve 44 which introduces air voids. In this case, water could reach the engine 42 either through use of a highly water permeable or water permeable valve, highly water permeable or water permeable casing 40, or casing 40 with open areas exposing the engine 42 to the water either inside or outside the casing 40.

In place of using an engine 42 and valve 44 combination, wherein blocking of the flow port 46 is an indirect result of engine 42 growth (e.g., wherein the engine 42 advances the valve 44 into a flow port 46 or outlet 24 blocking position, thus indirectly blocking the flow port 46 or outlet 24), the engine 42 may serve as the valve 44 also, wherein blocking the flow port 46 or sealing of the outlet 24 is a direct result of engine 42 growth (that is, wherein the flow port 46 or outlet 24 is directly physically blocked by the engine 42). This may be achieved by using an engine 42 that is in the shape of a cylinder, such that water entering through the water treatment material 26, contacts the engine 42, and the engine 42 expands and seals the flow port 46. This approach may not prevent the user from extending water treatment cartridge 10 lifetime by "drying-out" the engine 42. However, drying-out may be minimized by creating an environment where the complete removal of water in contact with the engine 42 requires considerable effort, and is thus not practical.

Flow through the water treatment cartridge 10 may be arrested as a result of blocking the outlet 24 instead of blocking one or more flow ports 46. For instance, the outlet 24 may be directly blocked by the engine 42. Alternatively, the valve 44 may be used to block the outlet 24 in the same manner that the valve 44 may be used to block the flow port 46 (explained above).

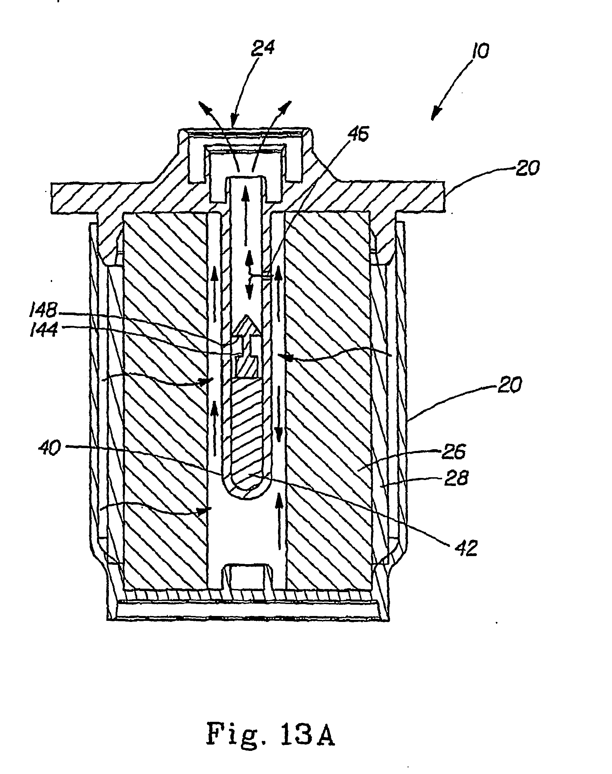

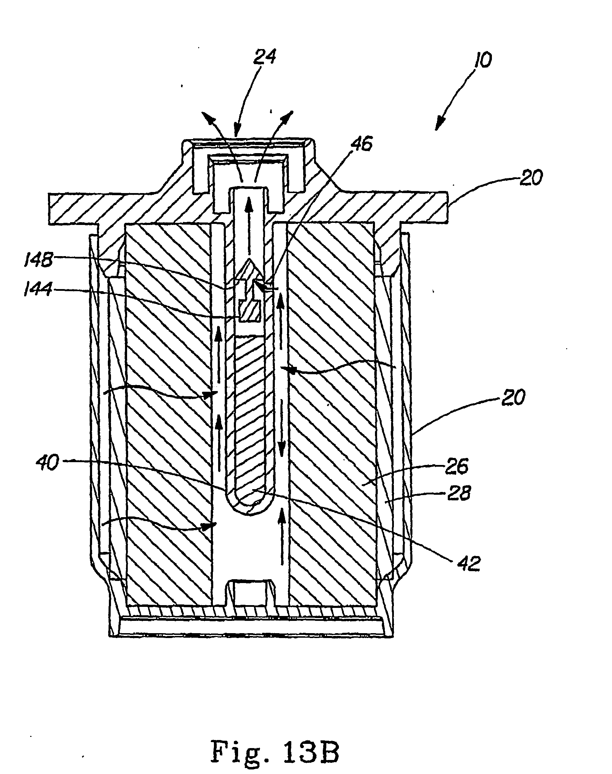

Alternatively, as shown in Figs. 13-A and 13-B, a valve 144 may be used that is advanced to a position of blocking the outlet 24 in part by the engine 42 and in part by the flow of water through the casing 40. The valve 144 may comprise a ledge 148. The valve 144 be in physical contact with the engine 42. As the engine 42 grows, the valve 144 may advance. When the valve is advanced to the flow port 46 such that the ledge 148 is in the main stream that flows through the casing 40, the valve 144 may be advanced by the water pressure building behind the ledge 148, such that the valve 144 is advanced to a position of blocking the outlet 24. Thus, while the valve 144 may be first advanced by the engine 42, it may ultimately be advanced to an outlet 24 blocking position by the water which flows through the casing 40, resulting in a nearly instantaneous arrest of water through the water treatment cartridge 10. It would be the interference frictional fit and/or water pressure that maintains the valve 144 in an outlet 24 blocking position.

It may be desirable to consistently and predictably arrest the flow of water within a residential-scale water treatment cartridge 10 a short time period after a breach of the intended flow path of water through the water treatment cartridge 10 and/or a water treatment device has occurred. For instance, it may be desirable to at least substantially arrest the flow of water through the water treatment cartridge 10 after a predetermined time, including, but not limited to, after about 1 minute, after about 5 minutes, after about 10 minutes, after about 30 minutes, after about 1 hour, after about 2 hours, after about 10 hours, after about 12 hours, after about 1 day, after about 2 days, after about 3 days, after about 4 days, after about 5 days, after about 7 days, after about 10 days, after about 12 days, or after about 15 days from the time of an initial breach of the intended flow path through and/or around the water treatment cartridge 10.

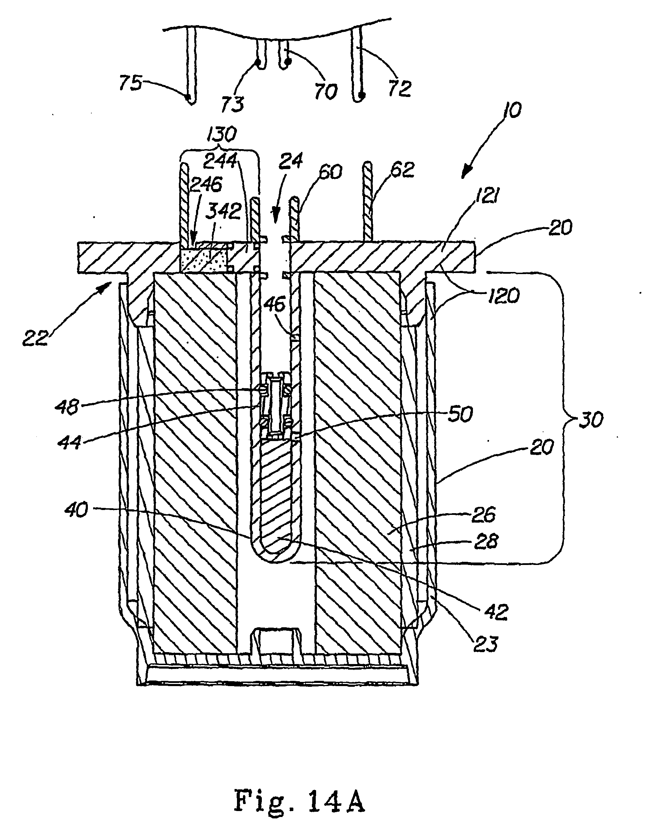

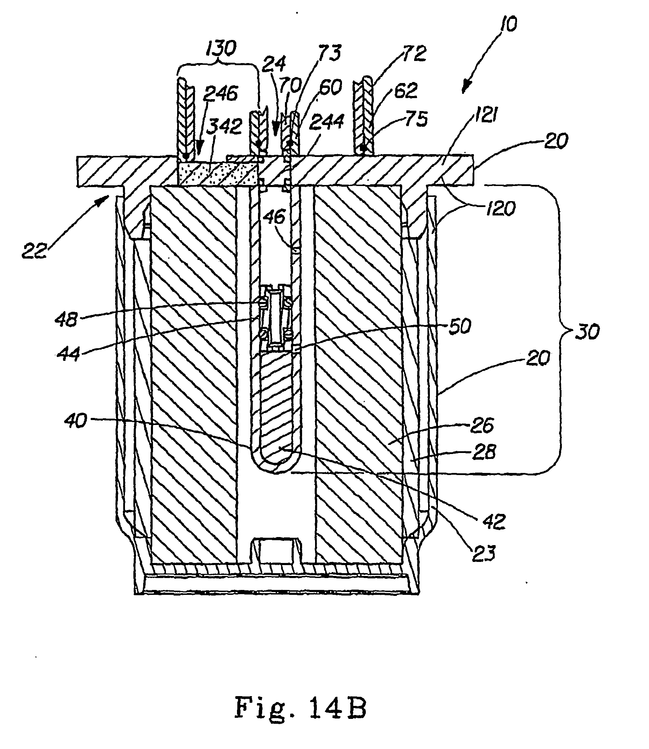

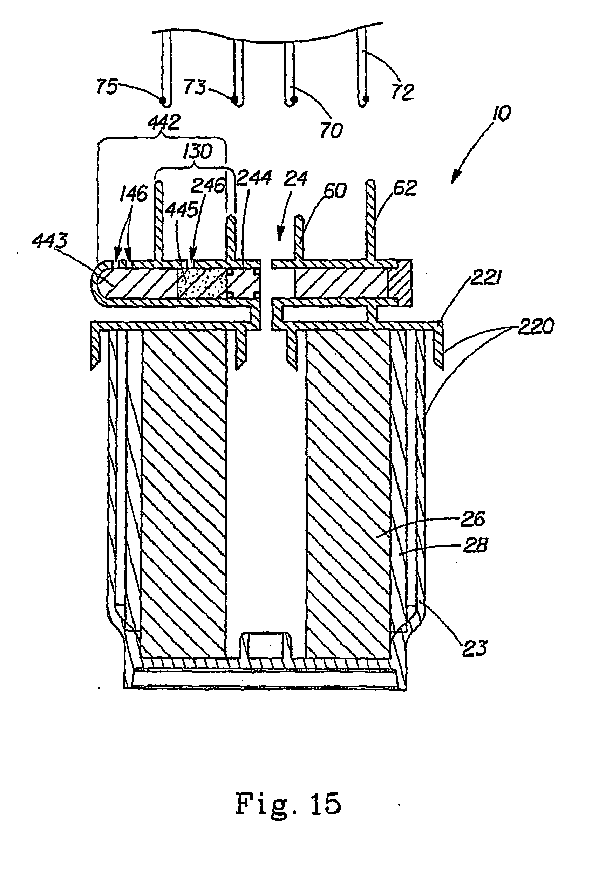

As shown in Figs. 14-A, 14-B, and 15, a water treatment cartridge 10 may interface with a water treatment device (shown in part) such that a first tube 60 and a second tube 62 of the water treatment cartridge 10 may sealingly interface with a first housing 70 and a second housing 72 of the water treatment device *(see,* e.g., U.S. Patent. App. No. 10/665,948). The first and second housings 70 and 72 may have O-rings 73 and 75, respectively, around them. The intended flow path (*see* Fig. 14-B) of water through the water treatment device and water treatment cartridge 10 may include contaminated water surrounding the second tube 62 and the second housing 72, then flowing into the water treatment cartridge 10 through the inlet 22, water may then flow radially through the pre-treatment material 28 and the water treatment material 26, and may eventually exit the casing 40 via the outlet 24.

The first tube 60 and the second tube 62 sealingly interfacing with the first housing 70 and the second housing 72 may act as a double barrier around the outlet 24, such that any contaminated water that gets past the sealing engagement of the second tube 62 and the second housing 72 will be blocked by the sealing engagement of the first tube 60 and the first housing 70. However, once the first breach occurs, it may be desirable to promptly, or within a reasonable time, arrest the flow of water through the water treatment cartridge 10 before contaminated water has a chance to also breach the interface between first tube 60 and the first housing 70.

As shown in Figs. 14-A and 14-B, a second shutoff 130 (housed within the top portion 121 of the housing 120) may be used to at least substantially arrest the flow of water through the water treatment cartridge 10 after a substantially short predetermined amount of time period after a breach of the intended flow path through the water treatment cartridge 10 has occurred. In this case, the breach may be about 0.1 mL, about 0.2 mL, about 0.3 mL, about 0.4 mL, about 0.5 mL, about 0.6 mL, about 0.7 mL, about 0.8 mL, about 0.9 mL, about 1 mL, about 1.5 mL, about 2 mL, about 2.5 mL, about 3 mL, or about 5 mL of water leaking past the sealing engagement of the second tube 62 and the second housing 72 or through the sealing engagement of the first tube 60 and first housing 70. The second shutoff 130 may comprise a second engine 342 comprising a highly water swellable material, and a second valve 244. For example, once a breach of contaminated water occurs through the second tube 62 and the second housing 72, the second engine 342 may expand or swell upon contact with the water (via the flow port 246), such that a second valve 244 may be pushed into a position such that the outlet 24 is blocked. Thus, when the intended flow path occurs, the shutoff 30 may function to at least substantially arrest the flow of water through the water treatment cartridge 10, however, when a breach occurs, the second shutoff 130 may function to at least substantially arrest the flow of water through the water treatment cartridge 10.

As shown in Fig. 15, it may be desirable to combine shutoffs (e.g., shutoff 30 and second shutoff 130 housed in the top portion 221 of the housing 220) such that the engine 442 comprises a first layer 443 and a second layer 445, wherein water intimately contacts and diffuses/convects through the first layer 443, causing it to swell or expand, when the intended flow path occurs (via flow ports 146), whereas the second layer 445 is also intimately contacted by water when a breach between the interface of the second tube 62 and the second housing 72 occurs (via flow port 246). Intimate contact does not include exposure of the second layer 445 to water via diffusion/convection through the first layer 443. For example, when the first layer 443 is intimately contacted by water, the flow of water through the water treatment cartridge 10 may be arrested after a first, longer, predetermined amount of time, including, but not limited to, after about 20 days, after about 40 days, after about 60 days, after about 90 days, after about 200 days, after about 300 days, after about 365 days, after about 400 days, or after about 720 days from the time of initial use of the water treatment cartridge 10. However, when the second layer 445 is intimately contacted by water, the flow of water through the water treatment cartridge 10 may be arrested after a second, shorter, predetermined amount of time, including, but not limited to after about 1 minute, after about 5 minutes, after about 10 minutes, after about 30 minutes, after about 1 hour, after about 2 hours, after about 10 hours, after about 12 hours, after about 1 day, after about 2 days, after about 3 days, after about 4 days, after about 5 days, after about 7 days, after about 10 days, after about 12 days, or after about 15 days from the time of an initial breach of the intended flow path through or around the water treatment cartridge 10.

It is foreseeable that other embodiments may be used which utilize the concept of at least substantially arresting the flow of water through the water treatment cartridge 10 after a first predetermined amount of time when an intended flow path of water through the water treatment device or cartridge 10 occurs, and at least substantially arresting the flow of water through the water treatment cartridge 10 after a second predetermined amount of time when an unintended flow path (i.e., a breach) of water through the water treatment device or cartridge 10 occurs. The first predetermined amount of time may correlate to the limitations of the water treatment material 26, whereas the second predetermined amount of time may correlate to the integrity of the water treatment device and/or cartridge 10, or the integrity of the sealing interface therebetween.

Beyond arresting the flow of water through the water treatment cartridge 10, the engine 42 or the valve 44 may be used to actuate a button, move an arm, complete a circuit, etc. for communicating to the user of the water treatment cartridge the approximate life status of the water treatment cartridge 10 (not shown). Alternatively, the engine 42 or the valve 44 may be made visible for communicating to the user of the water treatment cartridge the approximate life status of the water treatment cartridge 10 (not shown). The engine 42 or valve 44 may be made visible through a clear window in the casing 40, and/or a clear window in the water treatment device in which the water treatment cartridge 10 is being used.

The engine 42 and/or valve 44 may be used solely for the purpose of, or the means for, indicating the approximate life status of a water treatment cartridge 10, wherein the engine 42 and/or valve 44 is not used for arresting the flow of water through the water treatment cartridge 10. In this regard, the engine 42 and/or valve 44 may be used for the purpose of being a "wet indicator" or "wet timer".

As used herein, water absorption is measured gravitmetrically using a standard analytical balance with 4 decimal place accuracy. Free surface water (water not absorbed inside the material to be measured) is removed using a paper towel. The initial mass (defined as the first mass displayed by the balance once the material inertia had nullified) is recorded to assure water did not have sufficient time to diffuse to the surface and evaporate. It is assumed that the initial mass of the material is constant with time and mass change is only due to water ingress. This method neglects the small amount of water soluble materials present in the starting material that would have left and altered the starting material mass and overall moisture fraction calculation. % Weight Change is calculated as 100 x {(Mass of sample at present time - Mass of sample at time zero)/(Mass of sample at time zero)}.

As used herein, the length change in the direction of interest of a material with respect to time is measured using a calibrated Omis II optical profilometer device manufactured by Ram Optical Instrumentation, 1791 Deere Ave., Irvine, CA, 92606. Growth of unconstrained materials is measured by selecting two material points on the ends in the direction of interest on the uppermost surface and monitoring their separation distance with time. For constrained materials, the length change in the axial direction is measured with the aide of a tube of consistent length. The tube is inserted into the open end of the constraining material until it contacts the upper surface of either the engine or the valve. Material points are selected; one on the uppermost surface of the constraining material and one on the uppermost surface of the tubing endpoint. The separation distance between the two material points is measured at various times. The initial length of the engine is determined prior to installation into the constraining material using the method described above. For unconstrained materials, % Length Change is calculated as 100 x {(Distance between material points at present time - Distance between material points at time zero)/(Distance between material points at time zero)}. For constrained materials, % Length Change is calculated as 100 x {(Distance between material points at present time - Distance between material points at time zero)/(Initial material length)}. For constrained materials, Growth is calculated as (Distance between material points at present time - Distance between material points at time zero).

Examples of the invention are described below. These Examples are solely for illustration and the invention(s) described herein is/are not meant to be restricted by these Examples.

### EXAMPLE 1

### Water Treatment Cartridge Comprising Shutoff

A casing made from polypropylene, having an inner diameter and outer diameter of about 1/4" and 3/8", respectively, is fitted into a radial flow carbon block (for treating water) having an outer diameter of 2" and an inner diameter of 5/8", respectively, (which makes up the core region). The carbon block is capped on both ends. The carbon block has a length of about 3". The casing extends from the top of the carbon block to approximately 3/4" from the bottom of the carbon block. The casing has a circular flow port of about 1/16" in diameter near its end portion adjacent to an outlet. About a 1 g engine made of MH 1657, in the form of a solid cylindrical slug having an outer diameter of about 1/4", is friction fitted into the bottom portion of the casing. The length of the MH 1657 engine is about 7/8". A valve made from high density polyethylene (HDPE) and in the form of a tube having an inner diameter and an outer diameter of about 1/8" and about 1/4", respectively, is slideably fitted into the casing, resting upon the engine, and approximately 25/64" below the flow port. The valve has a length of approximately 13/32". Two NSF61 O-rings made of nitrile rubber (from Hydr-O-Seal, 20382 Herman Circle, Lake Forest, CA, 92630) and lubricated (with Dow Corning® #976V High Vacuum Grease, a silicone based lubricant), are positioned on the valve and separated by a distance of approximately 9/32".

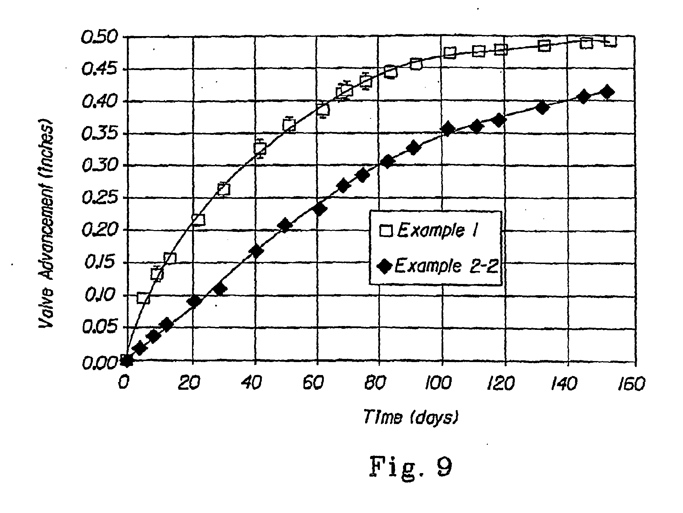

During the initial filling and wet-out of the carbon block, water fills the water treatment cartridge from bottom to top. Water radially flows through the carbon block. Water first enters an air evacuation hole located at the MH 1657 engine/valve interface. The rising action of the water completely evacuates the assembly of air, which establishes intimate water contact with the MH 1657 engine. After a period of a few days, the MH 1657 engine grows sufficiently to cover the air evacuation hole, which allows water to enter only through the flow port. The water passes through and out of the casing and exits via the outlet. The engine continues to grow and move the valve until the valve blocks the flow port, thus preventing the passage of additional water into the casing. The shutoff is designed such that the flow of water through the water treatment cartridge is at least substantially arrested after the engine grows, and the valve is advanced about 25/64", which is after about 60 days *(see* Fig. 9).

### EXAMPLES 2-1, 2-2, and 2-3

### Water Treatment Cartridges Comprising Shutoff

Examples 2-1, 2-2, and 2-3 are consistent with Example 1, except as noted in Table 1.

**TABLE 1**

| **Example #** | **Engine composition** | **Initial Engine Length** | **Valve Position Below the Flow Port** | **Shutoff Time** |
|---|---|---|---|---|
| | | **(including hemispherical apex)** | | **(approximate)** |
| 2-1 | MH 1657 | 3/4" | 5/16" | 50 days |
| 2-2 (*see* Fig. 9) | MV 3000 First layer and | 1/16" MV 3000 on 13/16" MH 1657 | 7/16" | 180 days |
| | MH 1657 Second layer | | | |
| 2-3 | MV 1074 First layer and | 1/8" MV 1074 on 3/4" MH 1657 | 3/8" | 140 days |
| | MH 1657 Second layer | | | |

Additionally, instructions or information that will communicate to the user, by words and/or by pictures, that use of a water treatment cartridge 10 comprising a shutoff 30 may provide benefits which includes arresting the flow of water through the water treatment cartridge 10 after a predetermined amount of time, and/or indicating the life status of the water treatment cartridge 10. Further, this information may include the claim of superiority over other water treatment cartridges. Accordingly, the use of packages in association with information may be used to communicate to the consumer, by words and or by pictures, that use of the invention will help to ensure integrity of the performance of the water treatment cartridge 10. The information may include advertising in all of the usual media, as well as statements and/or icons on the water treatment cartridge 10 package, or the water treatment cartridge 10 itself, for the purpose of informing the consumer.

While particular embodiments of the invention have been illustrated and described, it would be apparent to those skilled in the art that various other changes and modifications can be made without departing from the scope of the appended claims.

## Claims

1. A water treatment cartridge (10) comprising:
a) an inlet (22) for receiving water into the water treatment cartridge;
b) an outlet (24) for egress of water from the water treatment cartridge (10);
c) a water treatment material (26) for treating the water; and
d) a shutoff (30, 130) for at least substantially arresting the flow of water through the water treatment cartridge, the shutoff comprising an engine (42, 142, 242, 342, 442), at least a portion of the engine expanding upon exposure to water, such that the shutoff at least substantially arrests the flow of water through the water treatment cartridge after a predetermined amount of time as a direct or indirect result of expansion of said engine;
**characterized in that** the portion of the engine which expands upon exposure to water comprises a material selected from polyamides, polyethers, and block copolymers of polyamides and polyethers.

2. The water treatment cartridge of Claim 1 wherein, after initial and sustained exposure to water, the expansion of said engine is continuous until the flow of water through the water treatment cartridge (10) is irreversibly arrested.

3. The water treatment cartridge according to Claim 1 or Claim 2, wherein the expansion of the engine is a result of diffusion of water through at least a portion of the engine.

4. The water treatment cartridge according to any of Claims 1 to 3, wherein the shutoff (30, 130) further comprises a casing (40), wherein the engine is partially encased by the casing such that expansion of the engine is in only one direction.

5. The water treatment cartridge according to any of Claims 1 to 4, wherein the shutoff (30, 130) further comprises a valve (44, 144, 244), and wherein the expansion of said engine advances said valve such that the flow of water through the water treatment cartridge (10) is at least substantially arrested by said valve.

6. The water treatment cartridge of Claim 5, wherein the shutoff comprises a casing (40) comprising at least one flow port (46, 146, 246), wherein the valve (44, 144, 244) is advanced by the engine (42, 142, 242, 342, 442) until the valve blocks the flow port such that the flow of water through the water treatment cartridge is at least substantially arrested by the valve.

7. The water treatment cartridge according to any of Claims 1 to 6, wherein said predetermined amount of time is from 1 month to 1 year, preferably from 2 months to 6 months.

8. A method of treating water for drinking which includes the steps of:
a) introducing the water into a water treatment cartridge (10) containing an inlet (22), an outlet (24), and a shutoff (30, 130), the shutoff having an engine (42, 142, 242, 342, 442) of which at least a portion expands upon exposure to water; and
b) treating the water with the water treatment cartridge until the flow of water through the cartridge is at least substantially arrested;
**characterised in that** the expanding portion of the engine comprises a material selected from polyamides, polyethers, and block copolymers of polyamides and polyethers.

9. A shutoff (30, 130) having:
a) an engine (42, 142, 242, 342, 442) for moving from a first position to a second position; and
b) a casing (40) for containing the engine, the casing having at least one flow port (46, 146, 246);
c) wherein the engine expands from said first position to said second position after a predetermined amount of time when contacted with water, the flow port being at least substantially blocked, directly or indirectly, by the engine when the engine is in said second position;
**characterised in that** the engine comprises a material selected from polyamides, polyethers, and block copolymers of polyamides and polyethers.

## Patentansprüche

1. Wasserbehandlungskartusche (10), umfassend:
a) einen Einlass (22) zum Aufnehmen von Wasser in die Wasserbehandlungskartusche;
b) einen Auslass (24) zum Ausgeben von Wasser aus der Wasserbehandlungskartusche (10);
c) ein Wasserbehandlungsmaterial (26) zum Behandeln des Wassers; und
d) eine Absperrung (30, 130), um den Wasserstrom durch die Wasserbehandlungskartusche mindestens im Wesentlichen anzuhalten, wobei die Absperrung einen Motor (42, 142, 242, 342, 442) umfasst, wobei sich mindestens ein Abschnitt des Motors bei Wasseraussetzung derart ausdehnt, dass die Absperrung den Wasserstrom durch die Wasserbehandlungskartusche nach einer vorbestimmten Zeit als ein direktes oder indirektes Ergebnis der Ausdehnung des Motors mindestens im Wesentlichen anhält;
**dadurch gekennzeichnet, dass** der Abschnitt des Motors, der sich bei Wasseraussetzung ausdehnt, ein Material umfasst, das ausgewählt ist aus Polyamiden, Polyethern und Blockcopolymeren von Polyamiden und Polyethern.

2. Wasserbehandlungskartusche nach Anspruch 1, wobei die Ausdehnung des Motors nach anfänglicher und andauernder Wasseraussetzung kontinuierlich ist, bis der Wasserstrom durch die Wasserbehandlungskartusche (10) irreversibel angehalten wird.

3. Wasserbehandlungskartusche nach Anspruch 1 oder Anspruch 2, wobei die Ausdehnung des Motors ein Ergebnis der Diffusion von Wasser durch mindestens einen Abschnitt des Motors ist.

4. Wasserbehandlungskartusche nach einem der Ansprüche 1 bis 3, wobei die Absperrung (30, 130) ferner ein Gehäuse (40) umfasst, wobei der Motor von dem Gehäuse teilweise eingeschlossen ist, so dass eine Ausdehnung des Motors nur in eine Richtung stattfindet.

5. Wasserbehandlungskartusche nach einem der Ansprüche 1 bis 4, wobei die Absperrung (30, 130) ferner ein Ventil (44, 144, 244) enthält und wobei die Ausdehnung des Motors das Ventil derart nach vom bringt, dass der Wasserstrom durch die Wasserbehandlungskartusche (10) von dem Ventil mindestens im Wesentlichen angehalten wird.

6. Wasserbehandlungskartusche nach Anspruch 5, wobei die Absperrung ein Gehäuse (40) umfasst, das mindestens eine Strömungsöffnung (46, 146, 246) umfasst, wobei das Ventil (44, 144, 244) von dem Motor (42, 142, 242, 342, 442) nach vom gebracht wird, bis das Ventil die Strömungsöffnung sperrt, so dass der Wasserstrom durch die Wasserbehandlungskartusche von dem Ventil mindestens im Wesentlichen angehalten wird.

7. Wasserbehandlungskartusche nach einem der Ansprüche 1 bis 6, wobei die vorbestimmte Zeit von 1 Monat bis 1 Jahr, vorzugsweise von 2 Monaten bis 6 Monate beträgt.

8. Verfahren zum Behandeln von Trinkwasser, das die folgenden Schritte umfasst:
a) Einführen des Wassers in eine Wasserbehandlungskartusche (10), die einen Einlass (22), einen Auslass (24) und eine Absperrung (30, 130) enthält, wobei die Absperrung einen Motor (42, 142, 242, 342, 442) aufweist, von dem sich bei Wasseraussetzung mindestens ein Abschnitt ausdehnt; und
b) Behandeln des Wassers mit der Wasserbehandlungskartusche, bis der Wasserstrom durch die Kartusche mindestens im Wesentlichen angehalten wird;
**dadurch gekennzeichnet, dass** der sich ausdehnende Abschnitt des Motors ein Material umfasst, das ausgewählt ist aus Polyamiden, Polyethern und Blockcopolymeren von Polyamiden und Polyethern.

9. Absperrung (30, 130) mit:
a) einem Motor (42, 142, 242, 342, 442)) zum Bewegen von einer ersten Position in eine zweite Position; und
b) einem Gehäuse (40) zum Unterbringen des Motors, wobei das Gehäuse mindestens eine Strömungsöffnung (46, 146, 246) aufweist;
c) wobei sich der Motor nach einer vorbestimmten Zeit von der ersten Position in die zweite Position ausdehnt, wenn er mit Wasser in Kontakt tritt, wobei die Strömungsöffnung von dem Motor direkt oder indirekt mindestens im Wesentlichen blockiert wird, wenn sich der Motor in der zweiten Position befindet;
**dadurch gekennzeichnet, dass** der Motor ein Material umfasst, das ausgewählt ist aus Polyamiden, Polyethern und Blockcopolymeren von Polyamiden und Polyethern.

## Revendications

1. Cartouche de traitement d'eau (10) comprenant :
a) une entrée (22) pour recevoir l'eau dans la cartouche de traitement d'eau ;
b) une sortie (24) pour la sortie de l'eau de la cartouche de traitement d'eau (10);
c) un matériau de traitement d'eau (26) pour le traitement de l'eau ; et
d) un dispositif d'arrêt (30, 130) pour arrêter au moins essentiellement le flux d'eau à travers la cartouche de traitement d'eau, le dispositif d'arrêt comprenant un mécanisme (42, 142, 242, 342, 442), au moins une partie du mécanisme subissant une expansion lors d'une exposition à l'eau, de telle sorte que le dispositif d'arrêt arrête au moins essentiellement le flux d'eau à travers la cartouche de traitement d'eau après une quantité de temps prédéterminée, en conséquence directe ou indirecte de l'expansion dudit mécanisme.
**caractérisée en ce que** la partie du mécanisme qui subit une expansion lors d'une exposition à de l'eau comprend un matériau choisi parmi les polyamides, polyéthers, et copolymères séquencés de polyamides et polyéthers.

2. Cartouche de traitement d'eau selon la revendication 1, dans laquelle après exposition initiale et prolongée à de l'eau, l'expansion dudit mécanisme est continue jusqu'à ce que le flux d'eau à travers la cartouche de traitement d'eau (10) soit arrêté de manière irréversible.

3. Cartouche de traitement d'eau selon la revendication 1 ou la revendication 2, dans laquelle l'expansion du mécanisme est un résultat de la diffusion d'eau à travers au moins une partie du mécanisme.

4. Cartouche de traitement d'eau selon l'une quelconque des revendications 1 à 3, dans laquelle le dispositif d'arrêt (30, 130) comprend, en outre, un boîtier (40), dans laquelle le mécanisme est partiellement enveloppé par le boîtier de telle sorte que l'expansion du mécanisme est uniquement dans une direction.

5. Cartouche de traitement d'eau selon l'une quelconque des revendications 1 à 4, dans laquelle le dispositif d'arrêt (30, 130) contient en outre une soupape (44, 144, 244), et dans laquelle l'expansion dudit mécanisme avance ladite valve de telle sorte que le flux d'eau à travers la cartouche de traitement d'eau (10) est au moins essentiellement arrêté par ladite soupape.

6. Cartouche de traitement d'eau selon la revendication 5, dans laquelle le dispositif d'arrêt comprend un boîtier (40) comprenant au moins un port d'écoulement (46, 146, 246), dans laquelle la soupape (44, 144, 244) est avancée par le mécanisme (42, 142, 242, 342, 442) jusqu'à ce que la soupape bloque le port d'écoulement de telle sorte que le flux d'eau à travers la cartouche de traitement d'eau est au moins essentiellement arrêté par la soupape.

7. Cartouche de traitement d'eau selon l'une quelconque des revendications 1 à 6, dans laquelle ladite quantité prédéterminée de temps va de 1 mois à 1 an, de préférence de 2 mois à 6 mois.

8. Procédé de traitement d'eau à boire qui inclut les étapes consistant à :
a) introduire l'eau dans une cartouche de traitement d'eau (10) contenant une entrée (22), une sortie (24), et un dispositif d'arrêt (30, 130), le dispositif d'arrêt ayant un mécanisme (42, 142, 242, 342, 442) duquel au moins une partie subit une expansion lors d'une exposition à de l'eau ; et
b) traiter l'eau avec la cartouche de traitement d'eau jusqu'à ce que le flux d'eau à travers la cartouche soit au moins essentiellement arrêté.
**caractérisé en ce que** la partie du mécanisme qui subit une expansion comprend un matériau choisi parmi les polyamides, polyéthers, et copolymères séquencés de polyamides et polyéthers.

9. Dispositif d'arrêt (30, 130) ayant :
a) un mécanisme (42, 142, 242, 342, 442) pour se déplacer d'une première position à une deuxième position ; et
b) un boîtier (40) pour contenir le mécanisme, le boîtier ayant au moins un port d'écoulement (46, 146, 246) ;
c) dans lequel le mécanisme subit une expansion de ladite première position à ladite deuxième position après une quantité prédéterminée de temps lors d'une mise en contact avec de l'eau, ledit port d'écoulement étant au moins essentiellement bloqué, directement ou indirectement, par le mécanisme lorsque le mécanisme est dans ladite deuxième position.
**caractérisé en ce que** le mécanisme comprend un matériau choisi parmi les polyamides, polyéthers, et copolymères séquencés de polyamides et polyéthers.
